(19) Europäisches Patentamt
European Patent Office
Office européen des brevets

(11) Publication number: **0 146 995**
**B1**

(12) # EUROPEAN PATENT SPECIFICATION

(45) Date of publication of patent specification: **19.08.87**

(51) Int. Cl.$^4$: **C 08 L 59/02,** C 08 G 2/30, C 09 D 3/82

(21) Application number: **84201888.9**

(22) Date of filing: **17.12.84**

(54) **Organosiloxane compositions for abrasion resistant and adhesion promoting protective coatings.**

(30) Priority: **27.12.83 IT 2439383**

(43) Date of publication of application:
**03.07.85 Bulletin 85/27**

(45) Publication of the grant of the patent:
**19.08.87 Bulletin 87/34**

(84) Designated Contracting States:
**AT BE CH DE FR GB LI LU NL SE**

(56) References cited:
**US-A-3 252 825**
**US-A-3 887 602**

**The file contains technical information submitted after the application was filed and not included in this specification**

(73) Proprietor: **ENICHEM S.p.A.**
**Via Medici del Vascello 26**
**I-20138 Milano (IT)**

(72) Inventor: **Ascarelli, Paolo**
**Via S. Godenzo 36**
**I-00189 Rome (IT)**
Inventor: **Boccalon, Gianfranco**
**Via Nenni 41**
**I-00015 Monterotondo, Rome (IT)**
Inventor: **De Antoniis, Mario**
**Via A. Gramsci 47**
**I-00015 Monterotondo, Rome (IT)**

(74) Representative: **Roggero, Sergio et al**
**Ing. Barzanò & Zanardo Milano S.p.A.**
**Via Borgonuovo 10**
**I-20121 Milano (IT).**

**EP 0 146 995 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to organisiloxane compositions suitable to produce transparent and abrasion resistant protective coatings; the method is moreover described for preparing said compositions, which can be used as thermosetting paints, so as to obtain transparent uniform and solvent resistant coatings. Such coatings are useful to the purpose of coating and protecting soft substrates, such as organic polymers, to which said coatings are connected by means of direct adhesion.

The compositions are applied on to the surface of the substrate, and thermally set as insoluble coatings firmly bound on to said substrates.

Coatings of this type confer to the substrates properties of compatibility and adhesion towards further coatings, thus rendering it possible to obtain multilayer useful items, not obtainable by means of direct adhesion on the same substrates in the absence of such a coating.

It is well known that certain organic polymers, such as e.g. polycarbonate, polymethylmethacrylate, polyvinylchloride, polyester, have acceptable optical characteristics, good mechanical properties, such as impact strength and low specific gravity, so as to be able to be advantageously used as replacers of glass.

Unfortunately some undesirable surface properties, among which the low abrasion resistance, the easy attack by the solvents, and more generally the insufficient resistance to the atmospherical agents limit the uses of or render such organic polymers not very useful in those applications in which both abrasion resistance and solvent resistance, in addition to impact strength are all necessary.

To the purpose of obviating these drawbacks, many methods have been proposed.

Some methods use the deposition in the vacuum of thin inorganic coatings, such as $SiO_2$, $Al_2O_3$, $ZrO_2$, as mentioned in US 3.458.342 and 3.522.080.

This method is very expensive, and requires long times to the purpose of obtaining a layer of thickness at least thicker than 1 micron, to be resistant enough against abrasion. There is moreover an intrinsic disadvantage, due to the different coefficient of thermal expansion between the organic polymer substrate and the inorganic coating; for this reason, temperature changes cause spontaneous delaminations of the coating.

Other methods in which organofunctional silanes, also known as "coupling agents", are used, are known, to the purpose of obtaining protective coatings.

In US 3.451.836, the coating is proposed of substrates of polycarbonate or of polymethylmethacrylate by applying onto them a composition consisting of a mixture of methyltriethoxysilane and of phenyltriethoxysilane, and then effecting the hardening of the coating.

The resulting coating has a poor abrasion resistance and is therefore of limited usefulness.

In US 3.642.681, the use is disclosed of such compositions, on the base of polysilicic acid, practically of hydrolysed and partly condensed tetraethoxysilane, mixed together with esters of hydrolyzed silanes, as to be useful as thermosetting protective paints.

In US 3.986.997, the use is disclosed of paints consisting of a dispersion of colloidal silica in hydroalcoholic solution of a silanol, mainly consisting of partly condensed $CH_3—Si(OH)_3$.

The compositions of the types mentioned above originate coatings showing adequate abrasion resistance but, if on one side they are strongly adherent to inorganic substrates such as glass or metals, on the other hand their adhesion to organic polymers may be inadequate; so, e.g., the adhesion to polycarbonate and to poly-methyl-methacrylate is insufficient or not long lasting in the absence of a suitable primer coat.

A primer useful to this purpose is disclosed in US 4.127.697, in which the use is proposed of γ-amino-propyl-triethoxysilane in hydroalcoholic solution, to the purpose of treating the surface of polycarbonate. A uniform and thin layer is so obtained, which promotes the adhesion towards paints or compositions on the base of hydrolysed organo-alkoxysilanes which act as top coatings.

The treatment proposed is if only limited utility. It indeed, to the purpose of not altering the optical quality and the transparence of substrates, requires a very careful and delicate coating technique, to as to obtain an even coating of 1—10 molecular layers. Such an accuracy can be obtained only on small items, e.g., lenses.

A composition provided with adhesion characteristics and abrasion resistance is disclosed in US 4.042.749; it consists of a mixture of reactive silane and metal-esters, such as tetraalkyltitanates or tetra-alkylzirconates.

Both types of compounds are used without preliminary hydrolysis and the silanes are selected from carbofunctional silanes, containing i.e., an unsaturated or an epoxide group.

The composition is spread on the substrates, and submitted to a curing step either by exposure to U.V. rays, or by heating.

The compositions of this type suffer from the drawback that they must be used immediately, practically as soon as they are prepared, in that they are very moisture sensitive, and their storage may result problematical.

The present invention allows compositions to be obtained, whose usefulness is not so limited by the drawbacks mentioned. Such compositions indeed originate coatings of high transparence, uniformity and abrasion resistance; they are provided with very good adhesion characteristics to synthetic organic polymers to which they adhere without the need of a primer; they show moreover optimum spreading

characteristics also on large surfaces, using the conventional painting techniques; they possess optimum storage characteristics, even for months, maintaining their full efficiency.

The compositions according to the present invention have moreover the advantage of promoting the adhesion of the substrates coated thereby towards other coatings, such as vacuum-deposited coatings, or towards thermoplastic adhesives or plasticized adhesives, which otherwise would not adhere to, or would attack, the non-protected surfaces, such as, eg the adhesive used for laminating glass.

The subject compositions, stated otherwise, are useful also as primers, to the purpose of obtaining multi-layered transparent articles. More particularly, it is possible to obtain laminates, or coupled articles of organic polymers and glass and, especially, polycarbonate-glass composites, using plasticized polybutyral.

The invention, therefore, provides: An organosiloxane composition for abrasion-resistant and adhesion-promoting coatings on soft substrates, consisting of solvent and the reaction product of at least three components, each of which is selected from among one of the following classes:

A) an organo-alkoxysilane having the general formula:

$$Z-\underset{|}{\overset{H}{N}}-X-\underset{|}{\overset{R^{I}_{n}}{Si}}-(OR^{II})_{3-n} \qquad (1)$$

in which:

X is a divalent radical selected from among aryl- or alkylene radicals having from 1 to 10 carbon atoms;

$R^{I}$ is a member selected from among monovalent hydrocarbon radicals, halogenated alkyl- and aryl radicals or hydrogen;

$R^{II}$ is a member selected from among monovalent, optionally halogen- substituted, hydrocarbon radicals and hydrogen;

n is 0, 1 or 2, and

Z is a member selected from among hydrogen or monovalent alkyl radicals, or is an organo-alkoxysilane having the general formula:

$$Z-\overset{H}{N}-X_1-\overset{H}{N}-X_2-\overset{R^{I}_{n}}{Si}-(OR^{II})_{3-n} \qquad (2)$$

in which:

$X_1$ and $X_2$ may be the same or different, and are selected from among all those radicals which have been defined above for X and wherein Z.$R^{I}$ and $R^{II}$ are as defined above;

B) trioxane $(CH_2O)_3$, or a paraformaldehyde having the general formula:

$$H-(OCH_2)_m-OH \qquad (3)$$

in which m is from 6 to 100;

C) a monocarboxylic organic acid, and, optionally,

D) an inorganic acid selected from among phosphoric acid, boric acid, and silicic acid, said composition being prepared by reacting the component (A) with the component (B) with a molar ratio, as expressed in terms of (B)/N, ie as the ratio of the component (B) to the amino nitrogen, within the range of from 0,15 to 1,2, at a temperature within the range of from 5°C to 70°C, under a moisture-free inert atmosphere, quenching the reaction so that the dynamic viscosity of the reaction medium does not rise beyond 30mPas but rises to more than 5 mPas when measured at 27°C, finally diluting the product of the reaction of (A) with (B) in a dilution bath consisting of an aqueous solvent or an aqueous mixture of solvents containing a monocarboxylic organic acid (C) and, optionally, an inorganic acid (D) dissolved therein, the component (D) being present in such an amount that the molar ratio, expressed in terms of (D)/N, ie the ratio of (D) to the amino nitrogen lies within the range of from zero to 0,39, the ratio of the carboxyl acid equivalents to the amino nitrogen, in terms of (—COOH/N), varying within the range of from 0,75 to 2,5, so that the pH value of the final composition lies within the range of from 3 to 6.

According to a preferred embodiment, in the component (A), X is $(-CH_2)_m-$, with m comprised between 1 and 10, $R^{I}$ is an alkyl- or an aryl radical, $R^{II}$ is selected from among alkyl-, alkenyl-, cycloalkyl- and aryl radicals, and n is zero or 1. According to another preferred embodiment, in the component (A) $R^{I}$ is a member selected from among hydrogen, alkyl radicals of from 1 to 8 carbon atoms or aryl radicals, particularly phenyl, and $R^{II}$ is an alkyl radical of from 1 to 8 carbon atoms. According to still other embodiments of the invention, the component (A) is a member selected from among 3-aminopropyl-triethoxysilane, aminomethyl-triethoxysilane, 2-aminoethyl-aminopropyl-trimethoxysilane, and 2-aminoethyl-aminopropyl-methyldimethoxysilane.

As regards the component (C) of the composition according to the present invention, the following options are available:

C is a member selected from among hydroxyacids, aldehyde acids and ketoacids of from 1 to 4 carbon atoms, optionally halogen-substituted.

As an alternative,

(C) is a member selected from among formic-, acetic-, chloroacetic-, dichloroacetic-, trichloroacetic-, difluoroacetic-, trifluoroacetic-, glyoxylic- and glycolic acid.

In the composition according to the present invention, moreover, the molar ratio (B) to N is preferably comprised between 0,45 and 0,99.

When preparing the composition according to the present invention, the reaction between the component (A) and the component (B) takes place in solution within a solvent selected from among ethers, aliphatic and cycloaliphatic hydrocarbons, aliphatic alcohols, chlorinated and fluorinated hydrocarbons, esters, amides, alkyl-alkoxy-silanes having the general formula:

$$R^{I}_{n}—Si(OR^{II})_{4-n}$$

in which $R^{I}$ and $R^{II}$ have the same meanings as defined in claim 1 for component (A), and alkyl-acylsilanes.

The reaction between tthe component (A) and the component (B) is to take place within a temperature range of from 12° to 50°C, and for a time from 30 minutes to 5 hours.

The organic solvent containing the component (C) and, optionally the component (D) is selected from among the ethers, alcohols, aliphatic and cycloaliphatic hydrocarbons, fluorinated hydrocarbons, silanes and alkoxysilanes and their mixtures.

Preferred solvents for dissolving the component (C) and, optionally, the component (D) are selected from among the aliphatic alcohols having from 1 to 5 carbon atoms, and more particularly methanol, ethanol, isopropanol and n-butanol and their mixtures.

It is preferred that the ratio of the carboxy-acid equivalents to the amino-nitrogen, that is (—COOH:N), varies from 1,2 to 2.

The soft substrates to which the composition made according to the present invention can be applied can be selected from among aromatic polycarbonates, aliphatic polycarbonates, polyacrylates, polymethacrylates, polyesters, cellulose esters, polyacetals, polyamides, polyvinyl chloride, polysulphones, polyethersuphones, polystyrenes, and copolymers of styrene with acrylonitrile and with acrylonitrile and butadiene.

Preferred soft substrates are poly-(diphenyl-2,2'-propane carbonate), poly-(diethyleneglycol-bisallyl carbonate), polymethylmethacrylate, polyethylene terephthalate, cellulose acetate, cellulose propanoate and cellulose butanoate.

Further particular embodiments are set out in the claims.

The composition according to the present invention can be applied to the substrate concerned as soon as prepared, but it is preferred to keep it stored and continuously stirred for 7 days at room temperature before using it.

Immediately before using, the composition must be carefully filtered to remove any foreign matter susceptible for producing poor coatings. Dip coating, spray coating, flow coating, spin coating and, in general, any paint applying technique can be adopted. For planar sheets, even very wide, dipping is the suggested preferred way of application.

To the purpose of guaranteeing good optical characteristics of coated substrates, it is suitable to carry out the necessary operations in a dust free environment, with relative humidity of not more than 40%, and preferably within the range of from 20% to 30%.

Before being painted the substrates must be carefully cleaned, deprived of dusts and possibly well degreased: a suitable cleaning process consists of a first cleaning by ultrasounds in a water-soap bath, followed by a plentiful washing with deionized water, then by a washing in isopropanol and finally by a washing with a mixture of isopropanol and a freon fluorocarbon in the presence of ultrasounds.

After the application of a uniform paint layer, it is preferable to allow the substrate to stand at least 15 minutes within an environment at a temperature comprised within the range of from 22°C to 32°C, until the drying has taken place of the deposited layer before of the evaporation of the greater part of the solvent, and of volatile acids. After the drying, the coating is hardened at temperatures generally higher than 80°C, but however lower than the softening temperature of the organic poolymer substrates being considered.

In general, from 35 minutes to 120 minutes are enough for achieving a satisfactory setting; these times may also be reduced, if the process is carried out at high temperature in the vacuum.

The thickness of the coating can be varied, depending on the viscosity of the solution, and of the particular painting technique adopted, so as to obtain thicknesses of up to 15 micron, and preferably comprised within the range from 1 to 7 micron.

As above mentioned, the compositions are especially useful to the purpose of coating organic polymers of the types generally used for producing sheets, films or transparent articles, in particular flat or curved sheets, or cellular sheets.

Among them polymers are comprised, such as aromatic polycarbonates, such as poly-(diphenyl-2,2'-propane-carbonate), and aliphatic polycarbonates, such as poly(diethylene glycol-bisallyl-carbonate); polyacrylates, polymethacrylates, such as polymethylmethacrylate, polyesters such as poly(ethyleneterephtalate).

Other polymers which can be usefully coated with the protective coating of the invention are the esters of cellulose such as cellulose acetate, propinate and butyrate; polyacetals, polyamides, polyvinylchloride,

polysulphone, polyethersulphone, polystyrene and copolymers of styrene with acrylonitrile and acrylonitrile-butadiene. The so coated articles having the form of sheets, films or plates, of flat as well as of curved shape, or of cellular sheets, are useful as windows, protective shields, and more generally, items of this type may be usefully employed in the fields of building and of transportation industry.

Such articles, in particular the sheets, may be usefully employed to the purpose of preparing multilayer items, such as laminated sheets composed, e.g. by polycarbonate and glass. Such an advantageous application of so coated items derives from the property shown by the coatings, of promoting the adhesion to those plasticized thermoplastic adhesives which are commonly used to the purpose of laminating glass onto glass. In particular, as it is shown by the following Examples, the polycarbonate is advantageously made suitable to be laminated with glass by using as the adhesive e.g. the plasticized polyvinyl-butyral, without any phenomena arising of opacification of the polymer by the adhesive, as it on the contrary happens in the absence of such coating.

At the same time, the adhesion of polyvinylbutyral to polycarbonate is increased, so as to obtain multilayer items, in which the organic polymer is firmly bound to the glass by means of an interposed adhesive. Multilayer objects of this type are usefully employed as impact resistant or break-through resistant glasses, in that the mechanical properties of the polymer are not altered by the coating process according to the present invention.

In the following Examples, an advantagous application is additionally described of the coating of the invention, as primer coating to the purpose of obtaining multi layer articles having the structure polymer/primer/top coat in which the top coat in the absence of a primer does not have a satisfactory adhesion to the substrate, or, even if it has a certain degree of adhesion to it, said adhesion is not long lasting. This is the case of inorganic vitreous coatings vacuum deposited and of siloxane-vitreous coatings, containing i.e. a substantial amount of colloidal silica, such as those disclosed in US 3.986.997, or in GB 1.596.151.

Coatings of this type, as previously mentioned, possess an adequate abrasion resistance. In particular, a vacuum-deposite thin layer of $SiO_2$, a few micrometer thick, could be a suitable coating, due to its resistance to abrasion, much akin to that of glass. When such a deposition is made directly on a substrate, such as polycarbonate or polymethylmethacrylate, two kinds of troubles might occur, namely poor adhesion or a not durable adhesion, so that delamination may occur due to the different coefficients of heat expansion of the two materials.

Using the composition according to the invention as a primer allows that the top coating be applied thereby concurrently obtaining a good adhesion and an improved compatibility between the thermal expansion coefficients of the two kinds of materials concerned, so that the multilayered article is more long-lasting.

## Examples 1—4

A 500-ml reaction vessel, the temperature of which is thermostatically controlled at 32°C, is charged with 190 g (0,86 mol) of gamma-aminopropyltriethoxysilane. 12 g of trioxane $(CH_2O)_3$ were added thereto with stirring so that the molar ratio of $CH_2O$ to $NH_2$ was 0,47, as 12 g trioxane correspond to 0,4 mol HCHO.

The stirring speed was increased in order to be sure of the complete suspension of the powder within the liquid phase.

Trioxane was allowed to react until thoroughly dissolved ie until the solution became clear and its dynamic viscosity was 17.7 mPas.

At this stage, the reaction was discontinued by pouring the viscous product into a dilution bath, which was kept cooled at 5°C, which consisted of 340 ml ethanol, 80 ml (1.4 mol) of acetic acid, 2,6 g (0.026 mol) of phosphoric acid, and 21 g of water. The ratio of —COOH to $NH_2$ was 1,16 and the ratio of phosphoric acid to $NH_2$ was 0,03.

The composition thus obtained, having a pH of 4,5, was allowed to rest at room temperature with stirring, for 3 days, whereafter it was filtered and stored at 4°C for 25 days before being used. The composition did not show any traces of precipitates or gelled matter, even after 6 months as from its preparation.

A second composition (composition 2) was prepared by reacting 160 g (0,722 mol) of a 1:1 mixture of gamma-aminoproply-triethoxysilane and 2-aminoethyl-aminopropyl-trimethoxysilane, with a mixture of polyoxy-methylenes, consisting of 12 g of paraformaldehyde, $H—(OCH_2)_m—OH$, m being from 20 to 80, and 6 g of trioxane 0,6 mol of formaldehyde), so that the $CH_2O$ to $NH_2$ ratio was 0,83. The reaction was carried out at the thermostatically controlled temperature of 22°C, and the product thus obtained, was diluted with a thinner similar to composition 1, wherein the phosphoric acid was replaced by 2,5 g (0.04 mol) of boric acid, so that the ratio of —COOH to $NH_2$ was 1,94 and the ratio of boric acid to $NH_2$ was 0,05. The final pH was 5,5.

The solution thus prepared was store and used in parallel with the previous one.

## Examples 5—11

The compositions 1 and 2 of preceding Example were used for painting samples of polycarbonate, having the form of square slabs of side of 15 cm, and thickness of 3 mm, obtained by injection moulding of a commercial material sold under the trade name Sinvet® 251/01. The painting was carried out 30 days after

the preparation date of the compositions, and was later on repeated after further 90 days. The painting of the specimens was carried out at 20°C, in a moist environment maintained at a relative humidity of 28%, by means of the dipping technique, moving the sheets at the speed of 115 cm/min.

Each specimen was exposed to the atmosphere for 15 minutes, and then thermoset in an oven at 120°C for 1,5 hours.

Coatings were thus obtained with thicknesses of coating of 4—5 micron, such coatings being uniform, transparent and free from faults.

For comparison purposes, similar specimens were painted with the same process, with a composition (composition 5) prepared by diluting 190 g of γ-aminopropyl-triethoxy-silane in an acidic diluting bath of the same composition as described in Example 1: the reaction was i.e. omitted with polyoxymethylene.

Still for comparison purposes, a composition of basic type (composition 6) was prepared, by repeating the reaction of Example 1, and diluting the reaction product with only acid-free solvent.

Both comparison compositions (composition 5 and composition 6) were stored and used in parallel to compositions 1 and 2 on polycarbonate slabs.

In all cases, on the paint specimens the properties of the coatings were checked, such as the transmittance, the adhesion, the abrasion resistance, and the resistance to acetone.

The transmittance was measured by using a Haze-Meter Gardener instrument.

The adhesion to the substrates was measured by cutting on the surface 100 squares of sides of 1 mm, having care that the depth of the notches were higher than the thickness of the coating.

On notched squares, a section was applied of adhesive tape "Scotch"® type, Brand Magic Transparent Tape No 810 (3M). After having applied a strong pressure, the tape was abruptly raised, tearing off at an angle of 90° relatively to the surface of the specimen. The adhesion is thus evaluated with a rating of from 0 to 100, depending on the number of withdrawn squares after 3 repeated tests.

The resistance to abrasion was determined according to ASTM D 1044 method, by means of a Taber abrasion meter, using CS-10F grinding wheels under a load of 500 g, measuring the increase of haze (ΔH%) after 100 cycles by a Gardener Haze-Meter.

The resistance towards acetone was evaluated by applying on the surface a cotton flock soaked with solvent. After 15 minutes the presence or less was verified at attack points; should no alterations have been observed, the test was continued up to 30'. The test is considered to have been passed, if no alterations of the surface are observed after this contact time with the solvent. The rating is given by means of a (+) or of a (−) sign.

As shown in Table 1, only the complete preparation process of compositions 1 and 2 allows to obtain very efficient paints, that is, paints are long-lasting and which maintain the properties obtainable for the coatings by thermosetting.

Examples 12—15

An amount of 100 g (0,452 mol) of gamma-aminopropyltriethoxysilane was reacted with 8 g of trioxane (0,266 mol of formaldehyde) at a temperature of 32°C, as described in Example 1. The ratio of HCHO to $NH_2$ was 0,59.

The reaction product (dyn. viscosity 15,7 mPas at 26°C) wsa immediately diluted with a thinner bath composed of 80 g of methyltriethoxysilane, 100 ml ethanol, 40 ml (0,7 mol) of glacial acetic acid, 2,3 g (0.023 mol) of phosphoric acid and 21 g of water. The dilution bath had been prepared 24 hours before using, to obtain the desired composition: the ratio of —COOH to $NH_2$ ws 1,54 and the ratio of phosphoric acid to $NH_2$ was 0,05 and the final pH was 4.5.

The solution was kept stirred for 5 days at room temperature, then filtered, diluted with additional 200 ml aqueous ethanol (2.5% water).

The final composition (composition 7) was stored 30 days at 4°C before using, and then after 90-day storage, to paint rectangular specimens (10 × 15 cm) of polycarbonate (PC), polymethylmethacrylate (PMMA) and polystyrene (PST). The hardening of the coatings was 115°C for 1½ hours for PC, 87°C for 4 hours for PMMA and for PST.

For comparison, a similar composition was prepared, composition 8, using the same silanes but omitting the reaction product with polyoxymethylene.

The results are compared in Table II, which confirm that a uniform adhesion to the substrates, and a fully satisfactory transparence of the coating cannot be obtained if the reaction of the aminosilane with polyoxymethylene is dispensed with.

The considerably long shelf life of the compositions can be appreciated also several months as from their preparation.

Examples 16—19

A mixture of 400 g of gamma-aminopropyl-triethoxysilane and 100 g of aminomethyl-triethoxysilane (2,32 mol) is reacted with 42 g (1,4 mmol of formaldehyde) of trioxane by a process same as that of Example 12. Previously, and separately, a thinning bath had been prepared by mixing in the cold 500 ml of triethoxyvinylsilane with 2000 ml of a mixture of 1:3 methanol:ethanol which contained 209 ml (3,654 mol) of acetic acid, 60 g of water, and 12,5 g (0,127 mol) of phosphoric acid. The bath in question was allowed to stand 18 hours at room temperature prior to using for diluting the reaction product of the aminosilanes

with trioxane. The dilution step was carried out by slowly pouring the reaction product into the thinner, the latter being cooled at a temperature of from 0°C to 10°C. The ratio of —COOH to $NH_2$ was 1,57, the ratio of phosphoric acid was $NH_2$ was 0,05 and the final pH was 4,5.

The solution thus obtained (composition 9) was allowed to stay stirred at 20°C for 7 days, whereafter it was filtered, diluted again with 3000 ml of a 1:3 methanol:ethanol mixture and stored at 10°C for 30 days prior to using it for painting polycarbonate plastics samples: a primer coating as thick as 1 or 2 micrometers was thus applied.

Samples of that kind, 15 × 15 cm square, were subsequently painted by dipping them into a composition filled with colloidal silical and on the basis of hydrolyzed methyl-triethoxysilane.

Such composition, which was used here as top coat, was obtained by following the procedure hereunder:

100 g of an aqueous suspension of colloidal silica, containing 28% by weight of $SiO_2$ present as particles of dimensions of from 11 to 15 millimicron, were acidified at pH 3,5 with glacial acetic acid.

To this suspension 180 g were slowly added of methyl-triethoxysilane, keeping the temperature at a value of 5—10°C. pH was controlled at 3,5 by means of the addition of small quantities of acetic acid.

At the end of the addition, the suspension was left at room temperature for 24 hours, to allow the complete hydrolysis of the silane.

The suspension was then diluted with 500 ml of a solvent consisting of an ethanol/isopropanol mixture in the ratio 1:3 after having been left under stirring for 7 days at room temperature, the solution wsa filtered and then used to the purpose of painting the specimens which had already been painted with the primer obtained from composition (9).

For comparison purposes, with the same top coat paint, both polycarbonate samples without primer coating and polycarbonate samples with primer coating were coated, said primer coating having been obtained from a composition equivalent to composition No 9, but prepared omitting the reaction of amino-organosilanes with the polyoxymethylenes: this composition is referred to as composition (10).

A further comparison was carried out using a simple solution of γ-aminopropyl-triethoxysilane as primer, obtained by dissolving 1 part of silane in 6 parts of methanol containing 6% of water, and waiting 24 hours before using it (composition 11).

On the samples of the four types tests were carried out of adhesion of the coatings, and of resistance of the adhesion to accelerated ageing. To this purpose the samples were introduced inside a Wesather-O-Meter® for times of 250 and 500 hours.

The results are compared in Table III, in which it appears clearly that only the primer related to composition (9) allows a long lasting adhesion of organo-siloxane coating.

## Examples 20—23

The compositions of preceding Examples 12 and 16 (i.e., the compositions 7 and 9), and, for comparison purposes, the composition of Example 14 (i.e., composition 8) were used as primer coating on polycarbonate, so as to obtain substrate suitable to be coated with adhesion by a thin layer of glass, $SiO_2$, vacuum deposited.

Samples of 15 cm × 15 cm and 3 mm of thickness were coated on one face by means of the evaporation of silicon monoxide. The evaporation was carried out using a graphite melting pot under an atmosphere of 0,0667 Pa ($5.10^{-4}$ torr) of oxygen: the oxygen guarantees the complete conversion of vapourized monoxide into the dioxide $SiO_2$, which is deposited.

The sample was placed at a distance of 28 cm from the source, and its temperature was maintained within the range of from 52 to 57°C. The deposition rate was controlled so to constantly be of $15—10^{-10}$m (15 Å) per second, obtaining a 3 micron thick coating in a time of 33 minutes.

On the specimens, after the deposition, the adhesion test was performed as described in Example 1; where the adhesion was found to be satisfactory, the abrasion resistance test was also carried out by means of 750 cycles of a Taber abrasion meter, restoring the CS-10F grinding wheels every 150 cycles on restoring disks of the S-11 type.

As the data of Table IV show, only the primer coat prepared according to the present invention allows $SiO_2$ coatings to be deposited, which are well adherent, and provided with outstanding abrasion resistance. Such a result is to be compared with the behaviour of silica deposited on naked (i.e., without any primer) coating: in such a case, the $SiO_2$ coating is spontaneously delaminated as soon as the specimen is withdrawn from deposition chamber.

## Examples 24—26

A cellular sheet of polycarbonate, of dimensions 30 cm × 30 cm, of 1 cm in thickness, and with walls of 0,6 mm, was coated on one face using a spray gun with the composition disclosed in Exmaple 1.

For comparison purposes, and by the same method, a sheet of same dimensions was coated with the comnposition 5 of Example 9.

After having hardened the coatings at 110°C for 65 minutes, the sheets were used to prepare laminated sheets composed by glass sheets of the same dimensions, and of 2 mm in thickness. As the adhesive, to the purpose of bonding the polycarbonate to glass, a sheet was used in both cases of polyvinylbutyral plasticized with triethylene-glycol-di(2-ethylbutyrate), having a thickness of 0,75 mm.

The lamination was carried out by prearranging the three layers, firmly fixed by clamps, inside an oven under reduced pressure 13,3 Pa ($10^{-1}$ torr), and at 115°C for 20 minutes.

The samples were subsequently introduced inside an autoclave in air at $1{,}32.10^{-6}$ (13 atm) and at 125°C for 30 minutes.

In this way, transparent and appearingly evenly adhesion bound items were obtained in the form of laminates: cellular PC layer/coating/PVB/glass.

When the coating was not provided, the obtained items resulted to be completely opaque, due to the alteration of PC surface.

The resistance of the adhesion in the transparent items was verified by exposing the laminated items to thermal and moisture cycles: the samples were i.e. exposed at 70° and relative humidity of 95% for 12 hours, and subsequently at 4°C for further 12 hours.

The cycles were repeated until opacity or unbinding symptoms appeared.

As it can be seen from Table V, when the polycarbonate is not protected by the coating, the delamination occurs after the first cycle.

Only with the coating of Example 1 a true stability of the laminate was achieved; such stability is however higher than that obtained by means of compositions in which aminosilanes were not reacted with a poloyxymethylene.

In the following Examples a further demonstration is supplied of the stability of the adhesions which can be achieved in laminates in which the polycarbonate is coated by means of the composition disclosed herein before being bound to the glass by means of thermoplastic adhesives, such as polyvinylbutyral.

Example 27

The composition of Example 16, i.e, the composition 9, was used to the purpose of coating three samples of polycarbonate, of dimensions 30 cm × 30 cm and of 5 mm in thickness, cut out from a sheet manufactured by extrusion of Sinvet® type 273/01.

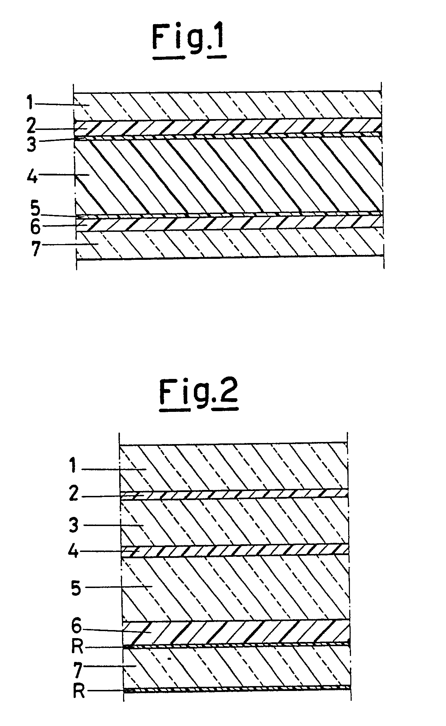

These samples were used to prepare 3 laminated items, with plasticized polyvinylbutyral, between pairs of glass sheets of 2 mm in thickness, according to the outline of Fig. 1 (1,7 = glass sheets of 2 mm thickness; 2, 6 = PVB of 0,75 mm in thickness; 3, 5 = coatings as per Example 7; 4 = polycarbonate of 5 mm in thickness).

The lamination was carried out as in the case of cellular sheets, following the process as disclosed in preceding Examples 24—26.

Three transparent laminates were obtained, free from faults, and with a light transmission of 78%

The three items were dipped in boiling water for two hours, they were then exposed to U.V. rays, using a Xenon lamp of 150 W for 100 hours, then the boiling step was repeated for further 2 hours.

At the end of the treatment, the samples were examined to the pupose of verifying the presence of unbindings, possible development of opacity points, development of bubbles, and so on. In no cases delaminations were observed, in one case over three some small isolated bubbles were produced of diameter of 1—2 mm in the central areas; in all cases, the opacity areas were limited within one cm from the edge of the laminate, where i.e. the adhesive is kept in direct contact with water.

Example 28

Starting from sheets of polycarbonate of dimensions of 50 cm × 50 cm, coated with the composition 9 as in preceding Examples, multilayer laminated items were prepared with glass layers and layers of polyvinyl butyral.

Such items as this Example demonstrates, are useful as transparent windows resistant to the ballistic impact of light weapons.

The items consisted of the following layers:

1) A sheet of not toughned glass, thickness 6 mm;
2) A layer of PVB of 0,75 mm of thickness;
3) A glass sheet of 6 mm;
4) A layer of 0,75 mm of PVB;
5) A glass sheet of 8 mm;
6) A layer of 2,2 mm of PVB;
7) a polycarbonate sheet of 5 mm, coated with the composition 9 of Example 16 (R).

For clearness sake, the arranging of the layers in these items is shown in Fig. 2.

On such multilayer "glasses' tests were carried out of resistance to ballistic impact of projectiles shot by light weapons.

To this purpose the multilayer items were mounted on a frame, kept fixed in their seat by means of four screw fasteners positioned in the four corners. The frame was installed on hinges, so as to be capable of acting as a window of a closed steel box.

By so doing, the multilayer items acts as the "glass" of the window, the polycarbonate layer being faced towards the inside of the box.

Inside the box, through a slot a certifying paper was introduced to the purpose of verifying the possible projection also of very fine splinters inside the box.

The results of ballistic tests are reported in Table VI.

In no cases, even with more powerful weapons, the perforation occurred of laminates; they moreover withstand repeated shots, thus demonstrating their usefulness.

The complete absence of splinters must moreover be emphasized. In the case of more powerful weapons, the projectiles deform the polycarbonate, which "reacts" to the shot deforming in a "plastic" way; this demonstrates that the mechanical properties of organic plymer have not been compromised.

TABLE 1

| Example | Type of composition | Age of composition (days) | Transmittance (%) * | Adhesion (%) | Abrasion strength (ΔH%) ** | Resistance to acetone (30') |
|---|---|---|---|---|---|---|
| 5 | 1 | 30 | 89 | 99 | 3,2 | + |
| 6 | 1 | 90 | 91,2 | 100 | 2,9 | + |
| 7 | 2 | 30 | 90,2 | 100 | 1,8 | + |
| 8 | 2 | 90 | 89,5 | 100 | 1,65 | + |
| 9 (Comparative) | 5 | 30 | opaque areas | 60 | — | (—) |
| 10 (Comparative) | 6 | 30 | 89 | 97 | 6 | + |
| 11 (Comparative) | 6 | 90 | 83 | 0 | — | (–) |

(*) On not coated polycarbonate the value of 18,3 was obtained.
(**) The transmittance of not coated specimens was of 86,5% in the average.

TABLE II

Properties of the coating on polycarbonate (PC), polymethylmethyacrylate (PMMA), polystyrene (PST)

| | Type of Composition | Age of Composition | PC | | PMMA | | PST | |
|---|---|---|---|---|---|---|---|---|
| | | | Adhesion | Appearance | Adhesion | Appearance | Adhesion | Appearance |
| Example 12 | 7 | 30 | 100 | Transparent | 98—100 | Transparent | 95—100 | Transparent |
| Example 13 | 7 | 90 | 100 | Transparent | 100 | Transparent | 100 | Transparent |
| Example 14 (Comp) | 8 | 30 | 30—50 | Transparent | <30 | Opalescent | <30 | Opalescent |
| Example 15 (Comp) | 8 | 90 | 0 | Opalescent | 0 | Opalescent | 0 | Opalescent |

TABLE III
Adhesion of organosiloxane coatings on PC after exposure in W—O—M

| | Composition of primer | (0 hours) | (250 hours) | (500 hours) |
|---|---|---|---|---|
| Example 16 | 9 | 100 | 100 | 100 |
| Example 17 (Comp) | 10 | 90—95 | 70—80 | 0 |
| Example 18 (Comp) | 11 | 90—100 | 50—60 | 0 |
| Example 19 (Comp) | No primer | 0 | — | — |

TABLE IV
Adhesion of $SiO_2$ deposited under vacuum on polycarbonate coated with primer coating

| | Composition of primer | Adhesion % | Abrasion resistance after 750 cycles (ΔHaze %) |
|---|---|---|---|
| Example 20 | 7 | 98—100 | 2,2 |
| Example 21 | 9 | 100 | 1,9 |
| Example 22 (Comp) | 8 | 50—100 | 8 |
| Example 23 (Comp) | No primer | Complete spontaneous delamination | — |

TABLE V
Stability of laminates PC (cellular sheet)/PVB/glass to thermal and moisture cycles

| | Coating on PC | Laminate appearance | No of cycles with delamination |
|---|---|---|---|
| Example 24 | 1 (Ex. 1) | Transpar. | >60 |
| Example 25 (Comp) | 5 (Ex. 9) | Transpar. | 14 |
| Example 26 (Comp) | No | Opaque | 1,5 |

TABLE VI
Resistance to ballistic shot of multilayer glasses laminated with polycarbonate

| Type of weapon | Energy of projectile at start (kgm) | Shooting distance (m) | Number of shots | Perforations |
|---|---|---|---|---|
| Revolver 44 Magnum | 120 | 3 | 6(1) | No perforations |
| FAL gun | 366 | 10 | 3(2) | No perforations |

(1) Impact points were spaced apart by 8 cm; an all-glass laminate of equal thickness is perforated at the third shot.
(2) Impact points were spaced apart by 20 cm; only one shot of FAL is enough for perforating an all-glass laminate of the same thickness.

**Claims for the Contracting State: AT**

1 A process for the preparation of an organosiloxane composition for abrasion-resistant and adhesion-promoting coatings on soft substrates consisting of solvent and the reaction product of at least three components, each of which is selected from among one of the following classes:

A) an organo-alkoxysilane having the general formula:

$$Z{-}\underset{|}{\overset{H}{N}}{-}X{-}\overset{R^{I}_{n}}{\underset{|}{Si}}{-}(OR^{II})_{3-n} \qquad (1)$$

in which:

X is a divalent radical selected from among aryl- or alkylene radicals having from 1 to 10 carbon atoms;

$R^I$ is a member selected from among monovalent hydrocarbon radicals, halogenated alkyl- and aryl radicals or hydrogen;

$R^{II}$ is a member selected from among monovalent, optionally halogen-substituted, hydrocarbon radicals and hydrogen;

*n* is 0, 1 or 2, and

*Z* is a member selected from among hydrogen or monovalent alkyl radicals, or an organo-alkoxysilane having the general formula:

$$Z{-}\overset{H}{N}{-}X_1{-}\overset{H}{N}{-}X_2{-}\overset{R^{I}_{n}}{Si}{-}(OR^{II})_{3-n} \qquad (2)$$

in which:

$X_1$ and $X_2$ may be the same or different, and are selected from among all those radicals which have been defined above for *X* and wherein *Z*, $R^I$ and $R^{II}$ are as defined above;

B) trioxane $(CH_2O)_3$, or a paraformaldehyde having the general formula:

$$H{-}(OCH_2)_m{-}OH \qquad (3)$$

in which *m* is from 6 to 100; C) a monocarboxylic organic acid,

and, optionally,

D) an inorganic acid selected from among phosphoric acid, boric acid, and silicic acid,

said process being characterized in that the composition is prepared by reacting the component (A) with the component (B) with a molar ratio, as expressed in terms of (B)/N, ie as the ratio of the component (B) to the amino nitrogen, within the range of from 0,15 to 1,2 at a temperature within the range of from 5°C to 70°C, under a moisture-free inert atmosphere, quenching the reaction so that the dynamic viscosity of the reaction-medium does not rise beyond 30 mPas but rises to more than 5 mPas when measured at 27°C, finally diluting the product of the reaction of (A) with (B) in a dilution bath consisting of an aqueous solvent, or an aqueous mixture of solvents containing a monocarboxylic organic acid (C) and, optionally, an inorganic acid (D) dissolved therein, the component (D) being present in such an amount that the molar ratio, expressed in terms of (D)/N, ie the ratio of (D) to the amino nitrogen lies within the range from zero to 0,39, the ratio of the carboxyl acid equivalents to the amino nitrogen in terms of (I—COOH/N), varying within the range of from 0,75, to 2,5, so that the pH-value of the final composition lies within the range of from 3 to 6.

2. Process according to claim 1, characterized in that, in the component (A), *X* is $(-CH_2)_m$-, with *m* comprised between 1 and 10, $R^I$ is an alkyl- or an aryl radical, $R^{II}$ is selected from among alkyl-, alkenyl-, cycloalkyl- and aryl radicals, and *n* is zero or 1.

3. Process according to claim 1, characterized in that, in the component (A), $R^I$ is a member selected from among hydrogen, alkyl radicals of from 1 to 8 carbon atoms, or aryl radicals, particularly phenyl, and $R^{II}$ is an alkyl radical of from 1 to 8 carbon atoms.

4. Process according to claim 1, characterized in that the component (A) is a member selected from among 3-aminopropyl-triethoxysilane, aminomethyl-triethoxysilane, 2-aminomethyl-aminopropyl-trimethoxysilane, and 2-aminoethyl-aminopropyl-methyldimethoxysilane.

5. Process according to claim 1, characterized in that the component (C) is a member selected from among hydroxyacids, aldehyde acids and ketoacids of from 1 to 4 carbon atoms, optionally halogen-substituted.

6. Process according to claim 5, characterized in that the component (C) is a member selected from among formic-, acetic-, chloroacetic-, dichloracetic-, trichloroacetic-, fluoroacetic-, difluoroacetic-, trifluroacetic-, glyoxylic-, and glycolic acid.

7. Process according to claim 1, characterized in that the molar ratio (B)/N is comprised between 0,45 and 0,99.

8. Process according to claim 1, characterized in that the reaction between the component (A) and the

component (B); takes place in solution within a solvent selected from among ethers, aliphatic and cycloaliphatic hydrocarbons, aliphatic alcohols, chlorinated and fluorinated hydrocarbons, esters, amides, alkyl-alkoxysilanes, having the general formula:

$$R^{I}_{n}—Si(OR^{II})_{4-n}$$

in which $R^I$ and $R^{II}$ have the same meanings as defined in claim 1 for component (A), and alkyl-acylsilanes.

9. Process according to claim 1, characterized in that the reaction between the component (A) and the component (B) takes place at a temperature within the range of from 12°C to 50°C.

10. Process according to claim 1, characterized in that the reaction between the component (A) and the component (B) takes place for a time of from 30 minutes to 5 hours.

11. Process according to claim 1, characterized in that the organic solvent containing the component (C) and, optionally, the component (D) is a member selected from among the ethers, alcohols, aliphatic and cycloaliphatic hydrocarbons, fluorinated hydrocarbons, silanes and alkoxysilanes and mixtures thereof.

12. Process according to claim 11, characterized in that the organic solvent is a member selected from among the aliphatic alcohols having from 1 to 5 carbon atoms, particularly methanol, ethanol, isopropanol, and n-butanol and mixtures thereof.

13. Process according to claim 1, characterized in that the ratio of the carboxyl-acid equivalents to the amino nitrogen, ie (COOH/N), varies from 1,2 to 2.

**Claims for the Contracting States: BE CH DE FR GB LI LU NL SE**

1. An organosiloxane composition for abrasion-resistant and adhesion-promoting coatings on soft substrates, consisting of solvent and the reaction product of at least three components, each of which is selected from among one of the following classes:

A) an organo-alkoxysilane having the general formula:

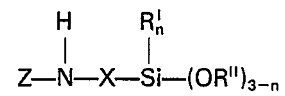

(1)

in which:

X is a divalent radical selected from among aryl- or alkylene radicals having from 1 to 10 carbon atoms;

$R^I$ is a member selected from among monovalent hydrocarbon radicals, halogenated alkyl- and aryl radicals or hydrogen;

$R^{II}$ is a member selected from among monovalent, optionally halogen-substituted, hydrocarbon radicals and hydrogen;

n is 0, 1 or 2, and

Z is a member selected from among hydrogen or monovalent alkyl radicals, or an organo-alkoxysilane having the general formula:

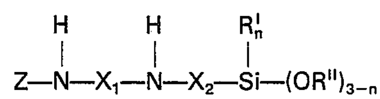

(2)

in which:

$X_1$ and $X_2$ may be the same or different, and are selected from among all those radicals which have been defined above for X and wherein Z, $R^I$ and $R^{II}$ are as defined above;

B) trioxane $(CH_2O)_3$, or a paraformaldehyde having the general formula:

$$H—(OCH_2)_m—OH \qquad (3)$$

in which m is from 6 to 100;

C) a monocarboxylic organic acid,

and, optionally,

D) an inorganic acid selected from among phosphoric acid, boric acid, and silicic acid,

said composition being prepared by reacting the component (A) with the component (B) with a molar ratio, as expressed in terms of (B)/N, ie as the ratio of the component (B) to the amino nitrogen, within the range of from 0,15 to 1,2, at a temperature within the range of from 5°C to 70°C, under a moisture-free inert atmosphere, quenching the reaction so that the dynamic viscosity of the reaction medium does not rise beyond 30mPas but rises to more than 5 mPas when measured at 27°C, finally diluting the product of the reaction of (A) with (B) in a dilution bath consisting of an aqueous solvent or an aqueous mixture of solvents containing a monocarboxylic organic acid (C) and, optionally, an inorganic acid (D) dissolved therein, the component (D) being present in such an amount that the molar ratio, expressed in terms of (D)/N, ie the ratio of (D) to the amino nitrogen lies within the range of from zero to 0,39, the ratio of the carboxyl acid equivalents to the amino nitrogen, in terms of (—COOH/N), varying within the range of from 0,75 to

2,5, so that the pH value of the final composition lies within the range of from 3 to 6.

2. A composition according to claim 1, wherein, in the component (A), X is $(-CH_2)_m$-, with m comprised between 1 and 10, $R^I$ is an alkyl- or an aryl radical, $R^{II}$ is selected from among alkyl-, alkenyl-, cycloalkyl- and aryl radicals, and n is zero or 1.

3. A composition according to claim 1, wherein, in the component (A), $R^I$ is a member selected from among hydrogen, alkyl radicals of from 1 to 8 carbon atoms or aryl radicals, particularly phenyl, and $R^{II}$ is an alkyl radical of from 1 to 8 carbon atoms.

4. A composition according to claim 1, wherein the component (A) is a member selected from among 3-aminopropyl-triethoxysilane, aminomethyl-triethoxysilane, 2-aminoethyl-aminopropyl-trimethoxysilane, and 2-aminoethyl-aminopropyl-methyldimethoxysilane.

5. A composition according to claim 1, wherein the component (C) is a member selected from among hydroxyacids, aldehyde acids and ketoacids of from 1 to 4 carbon atoms, optionally halogen-substituted.

6. A composition according to claim 5, wherein the component (C) is a member selected from among formic-, acetic-, chloroacetic-, dichloroacetic-, trichloroacetic-, fluoroacetic-, difluoroacetic-, trifluoroacetic-, glyoxylic- and glycolic acid.

7. A composition according to claim 1, wherein the molar ratio (B)/N is comprised between 0,45 and 0,99.

8. A composition according to claim 1, wherein the reaction between the component (A) and the component (B) takes place in solution within a solvent selected from among ethers, aliphatic and cycloaliphatic hydrocarbons, aliphatic alcohols, chlorinated and fluorinated hydrocarbons, esters, amides, alkyl-alkoxysilanes having the general formula:

$$R^I_n{-}Si(OR^{II})_{4-n}$$

in which $R^I$ and $R^{II}$ have the same meanings as defined in claim 1 for component (A), and alkyl-acylsilanes.

9. A composition according to claim 1, wherein the reaction between the component (A) and the component (B) takes place at a temperature within the range of from 12°C to 50°C.

10. A composition according to claim 1, wherein the reaction between the component (A) and the component (B) takes place for a time of from 30 minutes to 5 hours.

11. A composition according to claim 1, wherein the organic solvent containing the component (C) and, optionally, the component (D) is a member selected from among the ethers, alcohols, aliphatic and cycloaliphatic hydrocarbons, fluorinated hydrocarbons, silanes and alkoxysilanes and mixtures thereof.

12. A composition according to claim 11, wherein the organic solvent is a member selected from among the aliphatic alcohols having from 1 to 5 carbon atoms, particularly methanol, ethanol, isopropanol and n-butanol and mixtures thereof.

13. A composition according to claim 1, wherein the ratio of the carboxyl acid equivalents to the amino nitrogen, ie (—COOH/N), varies from 1,2 to 2.

14. Articles made of a soft material coated by means of a coating consisting of any composition according to claims 1 to 13.

15. Articles according to claim 14, wherein the soft substrate is a member selected from among aromatic polycarbonates, aliphatic polycarbonates, polyacrylates, polymethacrylates, polyesters, cellulose esters, polyacetals, polyamides, polyvinyl chloride, polysulphones, polyethersulphones, polystyrenes, and copolymers of styrene with acrylonitrile and with acrylonitrile and butadiene.

16. Articles according to claim 15, wherein the soft substrate is a member selected from among poly-(diphenyl-2,2'-propane carbonate), poly-(diethyleneglycol-bisallyl carbonate), polymethylmethacrylate, polyethylene terephthalate, cellulose acetate, cellulose propanoate and cellulose butanoate.

17. Articles consisting of a soft material coated by a primer-coating consisting of any composition according to claims 1 to 13.

18. Articles according to claim 17, shaped as plates, films, sheets, of either a planar or a curved outline, and cellular sheets.

19. Transparent laminated articles consisting of at least one glass plate and at least one sheet of a soft substrate, bonded by means of a plasticized thermoplastic adhesive, wherein the soft substrate is coated by a composition according to claims 1 to 13.

20. Transparent laminated article, consisting of two or more sheets of a soft substrate, bonded by a plasticized thermoplastic adhesive, wherein the soft substrate is coated by a composition according to claims 1 to 13.

21. Transparent laminated articles according to claims 19 and 20, wherein the plasticized thermoplastic adhesive is a plasticized polyvinylbutyral.

22. Transparent laminated articles according to claims 19 and 20, wherein the soft substrate is a cellular sheet.

**Patentansprüche für die Vertragsstaaten: BE CH DE FR GB LI LU NL SE**

1. Organosiloxanzusammensetzung für abriebbeständige und adhäsionsfördernde Beschichtungen

auf weichen Substraten, bestehend aus einem Lösungsmittel und dem Reaktionsprodukt aus wenigstens drei Komponenten, von denen jede aus einer der folgenden Klassen ausgewählt ist:

A) Organo-alkoxysilan mit der allgemeinen Formel:

$$Z{-}\overset{H}{\underset{|}{N}}{-}X{-}\overset{R^I_n}{\underset{|}{Si}}{-}(OR^{II})_{3-n} \qquad (1)$$

worin:

X einen zweiwertigen Rest bedeutet, ausgewählt unter Aryl- oder Alkylenresten mit 1 bis 10 Kohlenstoffatomen;

$R^I$ ein unter einwertigen Kohlenwasserstoffresten, halogenierten Alkyl- und Arylresten oder Wasserstoff ausgewähltes Glied ist;

$R^{II}$ ein unter einwertigen, gegebenenfalls halogensubstituierten Kohlenwasserstoffresten und Wasserstoff ausgewähltes Glied ist;

n den Wert 0, 1 oder 2 aufweist und

Z ein unter Wasserstoff oder einwertigen Alkylresten ausgewähltes Glied ist, oder ein Organo-alkoxysilan mit der allgemeinen Formel:

$$Z{-}\overset{H}{\underset{|}{N}}{-}X_1{-}\overset{H}{\underset{|}{N}}{-}X_2{-}\overset{R^I_n}{\underset{|}{Si}}{-}(OR^{II})_{3-n} \qquad (2)$$

worin:

$X_1$ und $X_2$ gleich oder verschieden sein können und unter allen jenen Resten ausgewählt sind, die zuvor für X definiert worden sind und worin

Z, $R^I$ und $R^{II}$ wie vorstehend definiert sind;

B) Trioxan $(CH_2O)_3$ oder ein Paraformaldehyd mit der allgemeinen Formel:

$$H{-}(OCH_2)_m{-}OH \qquad (3)$$

worin m einen Wert von 6 bis 100 aufweist;

C) eine organische Monocarbonsäure,

und gewünschtenfalls

D) eine anorganische Säure, ausgewählt unter Phosphorsäure, Borsäure und Kieselsäure,

welche Zusammensetzung dadurch hergestellt wird, daß die Komponente (A) mid der Komponente (B) mit einem Molverhältnis, ausgedrückt als (B)/N, d.h. als das Verhältnis der Komponente (B) zu dem Aminostickstoff, im Bereich von 0,15 bis 1,2 bei einer Temperatur im Bereich von 5°C bis 70°C unter einer feuchtigkeitsfreien, inerten Atmosphäre umgesetzt wird, Abstoppen der Reaktion, sodaß die dynamische Viskosität des Reaktionsmediums nicht über 30 mPas ansteigt, aber auf über 5 mPas ansteigt, wenn bei 27°C gemessen wird, schließlich Verdünnen des Produktes aus der Umsetzung von (A) mit (B) in einem Verdünnungsbad, das aus einem wäßrigen Lösungsmittel oder einem wäßrigen Gemisch von Lösungsmitteln mit einem Gehalt an einer organischen Monocarbonsäure (C) und gegebenenfalls an darin gelöster anorganischer Säure (D) besteht, wobei die Komponente (D) in solcher Menge vorliegt, daß das Molverhältnis, ausgedrückt als (D)/N, das ist das Verhältnis von (D) zum Aminostickstoff, innerhalb des Bereiches von 0 bis 0,39 liegt, und das Verhältnis der Carbonsäureäquivalente zu dem Aminostickstoff, ausgedrückt als (—COOH/N), innerhalb des Bereiches von 0,75 bis 2,5 liegt, sodaß der pH-Wert der Endzusammensetzung im Bereich von 3 bis 6 liegt.

2. Zusammensetzung nach Anspruch 1, worin in der Komponente (A) X für $(-CH_2)_m$- steht, worin m einen Wert von 1 bis 10 aufweist, $R^I$ einen Alkyl- oder einen Arylrest bedeutet, $R^{II}$ unter Alkyl-, Alkenyl-, Cycloalkyl- und Arylresten ausgewählt ist und n den Wert 0 oder 1 aufweist.

3. Zusammensetzung nach Anspruch 1, worin in der Komponente (A) $R^I$ ein unter Wasserstoff, Alkylresten mit 1 bis 8 Kohlenstoffatomen oder Arylresten, insbesondere Phenyl, ausgewähltes Glied ist und $R^{II}$ einen Alkylrest mit 1 bis 8 Kohlenstoffatomen bedeutet.

4. Zusammensetzung nach Anspruch 1, worin die Komponente (A) ein unter 3-Aminopropyl-triethoxysilan, Aminomethyl-triethoxysilan, 2-Aminoethyl-aminopropyl-trimethoxysilan und 2-Aminoethyl-aminopropyl-methyldimethoxysilan ausgewähltes Glied ist.

5. Zusammensetzung nach Anspruch 1, worin in der Komponente (C) ein unter gegebenenfalls halogensubstituierten Hydroxysäuren, Aldehydsäuren und Ketosäuren mit 1 bis 4 Kohlenstoffatomen ausgewähltes Glied ist.

6. Zusammensetzung nach Anspruch 5, worin die Komponente (C) eine unter Ameisensäure, Essigsäure, Chloressigsäure, Dichloressigsäure, Trichloressigsäure, Fluoressigsäure, Difluoressigsäure, Trifluoressigsäure, Glyoxylsäure und Glycolsäure ausgewähltes Glied ist.

7. Zusammensetzung nach Anspruch 1, worin das Molverhältnis (B)/N von 0,45 bis 0,99 beträgt.

8. Zusammensetzung nach Anspruch 1, worin die Umsetzung zwischen der Komponente (A) und der

Komponente (B) in Lösung in einem Lösungsmittel erfolgt, das unter Ethern, aliphatischen und cycloaliphatischen Kohlenwasserstoffen, aliphatischen, Alkoholen, chlorierten und fluorierten Kohlenwasserstoffen, Estern, Amiden, Alkyl-alkoxy-silanen mit der allgemeinen Formel:

$$R^{I}_{n}\text{—Si}(OR^{II})_{4-n}$$

worin $R^I$ und $R^{II}$ die in Anspruch 1 für Komponente (A) angegebenen Bedeutungen besitzen, und Alkylacylsilanen ausgewählt ist.

9. Zusammensetzung nach Anspruch 1, worin die Umsetzung zwischen der Komponente (A) und der Komponente (B) bei einer Temperatur im Bereich von 12°C bis 50°C erfolgt.

10. Zusammensetzung nach Anspruch 1, worin die Umsetzung zwischen der Komponente (A) und der Komponente (B) wärend einer Zeit von 30 Minuten bis 5 Stunden erfolgt.

11. Zusammensetzung nach Anspruch 1, worin das die Komponente (C) und gegebenenfalls die Komponente (D) enthaltende organische Lösungsmittel ein unter Ethern, Alkoholen, aliphatischen und cycloaliphatischen Kohlenwasserstoffen, fluorierten Kohlenwasserstoffen, Silanen und Alkoxysilanen und Gemischen hievon ausgewähltes Glied ist.

12. Zusammensetzung nach Anspruch 11, worin das organische Lösungsmittel ein unter aliphatischen Alkoholen mit 1 bis 5 Kohlenstoffatomen, insbesondere Methanol, Ethanol, Isopropanol und n-Butanol und Gemischen hievon ausgewähltes Glied ist.

13. Zusammensetzung nach Anspruch 11, worin das Verhältnis der Carbonsäureäquivalente zu dem Aminostickstoff, d.h. (—COOH/N), von 1,2 bis 2 beträgt.

14. Aus einem weichen Material bestehende und mittels einer Beschichtung, bestehend aus einer Zusammensetzung nach einem der Ansprüche 1 bis 13, beschichtete Gegenstände.

15. Gegenstände nach Anspruch 14, worin das weiche Substrat ein unter aromatischen Polycarbonaten, aliphatischen Polycarbonaten, Polyacrylaten, Polymethacrylaten, Polyestern, Celluloseestern, Polyacetalen, Polyamiden, Polyvinylchlorid, Polysulfonen, Polyethersulfonen, Polystyrolen und Copolymeren von Styrol mit Acrylnitril und mit Acrylnitril und Butadien ausgewähltes Glied ist.

16. Gegenstände nach Anspruch 15, worin das weiche Substrat ein unter Poly-(diphenyl-2,2'-propancarbonat), Poly-(diethylenglycolbisallyl-carbonat), Polymethylmethacrylat, Polyethylenterephthalat, Celluloseacetat, Cellulosepropanoat und Cellulosebutanoat ausgewähltes Glied ist.

17. Aus einem weichen Material bestehende Gegenstände, die mit einer Primer-Beschichtung, bestehend aus einer Zusammensetzung nach einem der Ansprüche 1 bis 13, beschichtet sind.

18. Gegenstände nach Anspruch 17 in Form von Platten, Filmen, Folien von planarer oder gekrümmter Kontur, und von Zellfolien.

19. Durchsichtige laminierte Gegenstände, bestehend aus wenigstens einer Glasplatte und wenigstens einer Folie aus einem weichen Substrat, das mittels eines weichgemachten thermoplastischen Klebstoffes verbunden ist, worin das weiche Substrat mit einer Zusammensetzung nach einem der Ansprüche 1 bis 13 beschichtet ist.

20. Durchsichtiger laminierter Gegenstand, bestehend aus zwei oder mehreren Folien aus einem weichen Substrat, die mit einem weichgemachten thermoplastischen Klebstoff gebunden sind, worin das weiche Substrat mit einer Zusammensetzung nach einem der Ansprüche 1 bis 13 beschichtet ist.

21. Durchsichtige laminierte Gegenstände nach den Ansprüchen 19 und 20, worin der weichgemachte thermoplastische Klebstoff ein weichgemachtes Polyvinylbutyral ist.

22. Durchsichtige laminierte Gegenstände nach den Ansprüchen 19 und 20, worin das weiche Substrat eine Zellfolie ist.

**Patentansprüche für den Vertragsstaat: AT**

1. Verfahren zur Herstellung einer Organosiloxanzusammensetzung für abriebbeständige und adhäsionsfördernde Beschichtungen auf weichen Substraten, bestehend aus einem Lösungsmittel und dem Reaktionsprodukt aus wenigstens drei Komponenten, von denen jede aus einer der folgenden Klassen ausgewählt ist:

A) Organo-alkoxysilan mit der allgemeinen Formel:

$$Z\text{—}\overset{\overset{\displaystyle H}{|}}{N}\text{—}X\text{—}\overset{\overset{\displaystyle R^{I}_{n}}{|}}{Si}\text{—}(OR^{II})_{3-n} \qquad (1)$$

worin:

X einen zweiwertigen Rest bedeutet, ausgewählt unter Aryl- oder Alkylenresten mit 1 bis 10 Kohlenstoffatomen;

$R^I$ ein unter einwertigen Kohlenwasserstoffresten, halogenierten Alkyl- und Arylresten oder Wasserstoff ausgewähltes Glied ist;

$R^{II}$ ein unter einwertigen, gegebenenfalls halogensubstituierten Kohlenwasserstoffresten und Wasserstoff ausgewähltes Glied ist;

n den Wert 0, 1 oder 2 aufweist und

Z ein unter Wasserstoff oder einwertigen Alkylresten ausgewähltes Glied ist, oder ein Organo-alkoxysilan mit der allgemeinen Formel:

$$Z-\underset{|}{\overset{H}{N}}-X_1-\underset{|}{\overset{H}{N}}-X_2-\overset{R^I_n}{\underset{}{Si}}-(OR^{II})_{3-n} \qquad (2)$$

worin:

$X_1$ und $X_2$ gleich oder verschieden sein können und unter allen jenen Resten ausgewählt sind, die zuvor für X definiert worden sind und worin

Z, $R^I$ und $R^{II}$ wie vorstehend definiert sind;

B) Trioxan $(CH_2O)_3$ oder ein Paraformaldehyd mit der allgemeinen Formel:

$$H-(OCH_2)_m-OH \qquad (3)$$

worin m einen Wert von 6 bix 100 aufweist;

C) eine organische Monocarbonsäure,

und gewünschtenfalls

D) eine anorganische Säure, ausgewählt unter Phosphorsäure, Borsäure und Kieselsäure,

welches Verfahren dadurch gekennzeichnet ist, daß die Zusammensetzung dadurch hergestellt wird, daß die Komponente (A) mit der Komponente (B) mit einem Molverhältnis, ausgedrückt als (B)/N, d.h. als das Verhältnis der Komponente (B) zu dem Aminostickstoff, im Bereich von 0,15 bis 1,2 bei einer Temperatur im Bereich von 5°C bis 70°C unter einer feuchtigkeitsfreien, inerten Atmosphäre umgesetzt wird, Abstoppen der Reaktion, sodaß die dynamische Viskosität des Reaktionsmediums nicht über 30 mPas ansteigt, aber auf über 5 mPas ansteigt, wenn bei 27°C gemessen wird, schließlich Verdünnen des Produktes aus der Umsetzung von (A) mit (B) in einem Verdünnungsbad, das aus einem wäßrigen Lösungsmittel oder einem wäßrigen Gemisch von Lösungsmitteln mit einem Gehalt an einer organischen Monocarbonsäure (C) und gegebenenfalls an darin gelöster anorganischer Säure (D) besteht, wobei die Komponente (D) in solcher Menge vorliegt, daß das Molverhältnis, ausgedrückt als (D)/N, das ist das Verhältnis von (D) zum Aminostickstoff, innerhalb des Bereiches von 0 bis 0,39 liegt, und das Verhältnis der Carbonsäureäquivalente zu dem Aminostickstoff, ausgedrückt als (—COOH/N), innerhalb des Bereiches von 0,75 bis 2,5 liegt, sodaß der pH-Wert der Endzusammensetzung im Bereich von 3 bis 6 liegt.

2. Verfahren nach Anspruch 1, dadurch gekennzeichnet, daß in der Komponente (A) X für $(-CH_2)_m$-steht, worin m einen Wert von 1 bis 10 aufweist, $R^I$ einen Alkyl- oder einen Arylrest bedeutet, $R^{II}$ unter Alkyl-, Alkenyl-, Cycloalkyl- und Arylresten ausgewählt ist und n den Wert 0 oder 1 aufweist.

3. Verfahren nach Anspruch 1, dadurch gekennzeichnet, daß in der Komponente (A) $R^I$ ein unter Wasserstoff, Alkylresten mit 1 bis 8 Kohlenstoffatomen oder Arylresten, insbesondere Phenyl, ausgewähltes Glied ist und $R^{II}$ einen Alkylrest mit 1 bis 8 Kohlenstoffatomen bedeutet.

4. Verfahren nach Anspruch 1, dadurch gekennzeichnet, daß die Komponente (A) ein unter 3-Aminopropyl-triethoxysilan, Aminomethyltriethoxysilan, 2-Aminoethyl-aminopropyl-trimethoxysilan und 2-Aminoethyl-aminopropyl-methyldimethoxysilan ausgewähltes Glied ist.

5. Verfahren nach Anspruch 1, dadurch gekennzeichnet, daß die Komponente (C) ein unter gegebenenfalls halogensubstituierten Hydroxysäuren, Aldehydsäuren und Ketosäuren mit 1 bis 4 Kohlenstoffatomen ausgewähltes Glied ist.

6. Verfahren nach Anspruch 5, dadurch gekennzeichnet, daß die Komponente (C) ein unter Ameisensäure, Essigsäure, Chloressigsäure, Dichloressigsäure, Trichloressigsäure, Fluoressigsäure, Difluoressigsäure, Trifluoressigsäure, Glkyoxylsäure und Glycolsäure ausgewähltes Glied ist.

7. Verfahren nach Anspruch 1, dadurch gekennzeichnet, daß das Molverhältnis (B)/N von 0,45 bis 0,99 beträgt.

8. Verfahren nach Anspruch 1, dadurch gekennzeichnet, daß die Umsetzung zwischen der Komponente (A) und der Komponente (B) in Lösung in einem Lösungsmittel erfolgt, das unter Ethern, aliphatischen und cycloaliphatischen Kohlenwasserstoffen, aliphatischen Alkoholen, chlorierten und fluorierten Kohlenwasserstoffen, Estern, Amiden, Alkyl-Alkoxysilanen mit der allgemeinen Formel:

$$R^I_n-Si(OR^{II})_{4-n}$$

worin $R^I$ und $R^{II}$ die in Anspruch 1 für Komponente (A) angegebenen Bedeutungen besitzen, und Alkylacylsilanen ausgewählt ist.

9. Verfahren nach Anspruch 1, dadurch gekennzeichnet, daß die Umsetzung zwischen der Komponente (A) und der Komponente (B) bei einer Temperatur im Bereich von 12°C bis 50°C erfolgt.

10. Verfahren nach Anspruch 1, dadurch gekennzeichnet, daß die Umsetzung zwischen der Komponente (A) und der Komponente (B) wärend einer Zeit von 30 Minuten bis 5 Stunden erfolgt.

11. Verfahren nach Anspruch 1, dadurch gekennzeichnet, daß das die Komponente (C) und gegebenenfalls die Komponente (D) enthaltende organische Lösungsmittel ein unter Ethern, Alkoholen, aliphatischen und cycloaliphatischen Kohlenwasserstoffen, fluorierten Kohlenwasserstoffen, Silanen und Alkoxysilanen und Gemischen hievon ausgewähltes Glied ist.

12. Verfahren nach Anspruch 11, dadurch gekennzeichnet, daß das organische Lösungsmittel ein unter aliphatischen Alkoholen mit 1 bis 5 Kohlenstoffatomen, insbesondere Methanol, Ethanol, Isopropanol und n-Butanol und Gemischen hievon ausgewähltes Glied ist.

13. Verfahren nach Anspruch 1, dadurch gekennzeichnet, daß das Verhältnis der Carbonsäureäquivalente zu dem Aminostickstoff, d.h. (—COOH/N), von 1,2 bis 2 beträgt.

**Revendications pour les Etats contractants: BE CH DE FR GB LI LU NL SE**

1. Composition à organosiloxane pour des revêtements résistant à l'abrasion et améliorant l'adhérence sur des substrats mous, constituée d'un solvant et du produit de réaction d'au moins trois composants, chacun d'eux étant choisi parmi l'une des classes suivantes:

A) un organo-alcoxysilane de formule générale:

$$Z-\overset{\overset{H}{|}}{N}-X-\overset{\overset{R^{I}_{n}}{|}}{Si}-(OR^{II})_{3-n} \qquad (1)$$

dans laquelle:

X est un radical divalent choisi parmi les radicaux arylène ou alkylène comportant de 1 à 10 atomes de carbone;

$R^I$ est choisi parmi un atome d'hydrogène et les radicaux monovalents hydrocarbonés, alkyles halogénés, et aryles halogénés;

$R^{II}$ est choisi parmi un atome d'hydrogène et les radicaux hydrocarbonés monovalents, éventuellement substitués par des atomes d'halogène;

n vaut 0, 1 ou 2, et

Z est choisi parmi un atome d'hydrogène et les radicaux alkyles monovalents, ou bien un organo-alcoxysilane de formule générale:

$$Z-\overset{\overset{H}{|}}{N}-X_1-\overset{\overset{H}{|}}{N}-X_2-\overset{\overset{R^{I}_{n}}{|}}{Si}-(OR^{II})_{3-n} \qquad (2)$$

dans laquelle:

$X_1$ et $X_2$ peuvent être identiques ou différents et sont choisis parmi tous les radicaux qui ont été définis ci-dessus pour X, et dans laquelle Z, $R^I$ et $R^{II}$ sont tels que définis ci-dessus;

B) le trioxane $(CH_2O)_3$, ou un paraformaldéhyde de formule générale:

$$H-(OCH_2)_m-OH \qquad (3)$$

dans laquelle m vaut de 6 à 100;

C) un acide organique monocarboxylique, et, éventuellement,

D) un acide minéral choisi parmi l'acide phosphorique, l'acide borique, et l'acide silicique,

ladite composition étant préparée de la façon suivante: on fait réagir le composant (A) avec le composant (B) en un rapport molaire, exprimé en terme de (B)/N, c'est-à-dire comme le rapport du composant (B) aux atomes d'azote des fonctions amines, situé dans l'intervalle allant de 0,15 à 1,2, à une température comprise entre 5°C et 70°C, dans une atmosphère inerte et exempte d'humidité, on arrête brutalement la réaction de telle sorte que la viscosité dynamique du milieu réactionnel ne s'élève pas au-dessus de 30 mPa.s, mais s'élève à une valeur supérieure à 5 mPa.s, lorsqu'on la mesure à 27°C, on dilue finalement le produit de la réaction de (A) avec (B) dans un bain de dilution constitué d'un solvant aqueux ou d'un mélange aqueux de solvant, contenant un acide organique monocarboxylique (C) et éventuellement un acide minéral (D) dissous dedans, le composant (D) étant présent en une quantité telle que le rapport molaire, exprimé en terme de (D)/N, c'est-à-dire le rapport de (D) aux atomes d'azote des fonctions amines, se situe dans l'intervalle allant de 0 à 0,39, le rapport des équivalents acide carboxylique aux atomes d'azote des fonctions amines, en terme de (—COOH/N), variant à l'intérieur de l'intervalle allant de 0,75 à 2,5, de telle sorte que le pH de la composition finale se situe à l'intérieur de l'intervalle allant de 3 à 6.

2. Composition conforme à la revendication 1, dans laquelle, dans le composant (A), X représente $(CH_2)_m$, m étant compris entre 1 et 10, $R^I$ est un radical alkyle ou aryle, $R^{II}$ est choisi parmi les radicaux alkyle, alcényle, cycloalkyle et aryle, et n vaut zéro ou 1.

3. Composition conforme à la revendication 1, dans laquelle, dans le composant (A), $R^I$ est choisi parmi

un atome d'hydrogène, les radicaux alkyle comportant 1 à 8 atomes de carbone, et les radicaux aryle, en particulier phényle, et $R^{II}$ est un radical alkyle comportant de 1 à 8 atomes de carbone.

4. Composition conforme à la revendication 1, dans laquelle le composant (A) est choisi parmi le 3-aminopropyl-triéthoxysilane, l'aminométhyl-triéthoxysilane, le 2-aminoéthyl-aminopropyl-triméthoxysilane, et le 2-aminoéthyl-aminopropyl-méthyldiméthoxysilane.

5. Composition conforme à la revendication 1, dans laquelle le composant (C) est choisi parmi les hydroxyacides, aldéhyde-acides et céto-acides comportant de 1 à 4 atomes de carbone, éventuellement substitués par des atomes d'halogène.

6. Composition conforme à la revendication 5, dans laquelle le composant (C) est choisi parmi les acides formique, acétique, chloroacétique, dichloroacétique, trichloroacétique, fluoroacétique, difluoroacétique, trifluoroacétique, glyoxylique, et glycolique.

7. Composition conforme à la revendication 1, dans laquelle le rapport molaire (B)/N est compris entre 0,45 et 0,99.

8. Composition conforme à la revendication 1, dans laquelle la réaction entre le composant (A) et le composant (B) a lieu en solution dans un solvant choisi parmi les éthers, les hydrocarbures aliphatiques et cycloaliphatiques, les alcools aliphatiques, les hydrocarbures chlorés et fluorés, les esters, les amides, les alkyl-alcoxysilanes de formule générale:

$$R^{I}_{n}—Si(OR^{II})_{4-n}$$

dans laquelle $R^{I}$ et $R^{II}$ ont les mêmes significations que celles définies dans la revendication 1 pour le composant (A), et les alkle-acylsilanes.

9. Composition conforme à la revendication 1, dans laquelle la réaction entre le composant (A) et le composant (B) a lieu à une température située dans l'intervalle allant de 12°C à 50°C.

10. Composition conforme à la revendication 1, dans laquelle la réaction entre le composant (A) et le composant (B) se déroule pendant une durée de 30 minutes à 5 heures.

11. Composition conforme à la revendication 1, dans laquelle le solvant organique contenant le composant (C) et éventuellement le composant (D) est choisi parmi les éthers, les alcools, les hydrocarbures aliphatiques et cycloaliphatiques, les hydrocarbures fluorés, les silanes, les alcoxysilanes et les mélanges de ces composés.

12. Composition conforme à la revendication 11, dans laquelle le solvant organique est choisi parmi les alcools aliphatiques comportant de 1 à 5 atomes de carbone, en particulier le méthanol, l'éthanol, l'isopropanol, le n-butanol, et leurs mélanges.

13. Composition conforme à la revendication 1, dans laquelle le rapport des équivalents acide carboxylique aux atomes d'azote des fonctions amines, c'est-à-dire (—COOH/N), varie entre 1,2 et 2.

14. Articles faits d'un matériau mou, revêtu au moyen d'un revêtement constitué de toute composition conforme aux revendications 1 à 13.

15. Articles conformes à la revendication 14, dans lesquels le substrat mou est choisi parmi les polycarbonates aromatiques, les polycarbonates aliphatiques, les polyacrylates, les polyméthacrylates, les polyesters, les esters de cellulose, les polyacétals, les polyamides, le poly(chlorure de vinyle), les polysulfones, les polyéthersulfones, le polystyrène, et les copolymères du styrène avec l'acrylonitrile et avec l'acrylonitrile et le butadiène.

16. Articles conformes à la revendication 15, dans lesquels le substrat mou est choisi parmi le poly(carbonate de diphényl-2,2'-propane), le poly(bisallyl-carbonate de diéthylène-glycol), le poly(méthacrylate de méthyle), le poly(téréphthalate d'éthylène), l'acétate de cellulose, le propanoate de cellulose et le butanoate de cellulose.

17. Articles constitués d'un matériau mou revêtu par une première couche constituée de toute composition conforme aux revendications 1 à 13.

18. Articles conformes à la revendication 17, sous forme de plaques, films, feuilles, de configuration plane ou incurvée, et de feuilles cellulaires.

19. Articles stratifiés transparents, constitués d'au moins une plaque de verre et d'au moins une feuille d'un substrat mou, fixées ensemble au moyen d'une colle thermoplastique plastifiée, dans lesquels le substrat mou est revêtu d'une composition conforme aux revendications 1 à 13.

20. Article stratifié transparent, constitué de deux feuilles ou plus d'un substrat mou, fixées ensemble par une colle thermoplastique plastifiée, dans lequel le substrat mou est revêtu d'une composition conforme aux revendications 1 à 13.

21. Articles stratifiés transparents conformes aux revendications 19 et 20, dans lesquels la colle thermoplastique plastifiée est un poly(butyral de vinyle) plastifié.

22. Articles stratifiés transparents conformes aux revendications 19 et 20, dans lesquels le substrat mou est une feuille cellulaire.

**Revendications pour l'Etat contractant: AT**

1. Procédé de préparation d'une composition à organosiloxane pour les revêtements résistant à l'abrasion et améliorant l'adhérence sur des substrats mous, constituée d'un solvant et du produit de

réaction d'au moins trois composants, chacun d'eux étant choisi parmi l'une des classes suivantes:

A) un organo-alcoxysilane de formule générale:

$$Z-\overset{H}{\underset{|}{N}}-X-\overset{R^I_n}{\underset{|}{Si}}-(OR^{II})_{3-n} \quad (1)$$

dans laquelle:

X est un radical divalent choisi parmi les radicaux arylène ou alkylène comportant de 1 à 10 atomes de carbone;

$R^I$ est choisi parmi un atome d'hydrogène et les radicaux monovalents hydrocarbonés, alkyles halogénés, et aryles halogénés;

$R^{II}$ est choisi parmi un atome d'hydrogène et les radicaux hydrocarbonés monovalents, éventuellement substitués par des atomes d'halogène;

n vaut 0, 1 ou 2, et

Z est choisi parmi un atome d'hydrogène et les radicaux alkyles monovalents, ou bien un organo-alcoxysilane de formule générale:

$$Z-\overset{H}{N}-X_1-\overset{H}{N}-X_2-\overset{R^I_n}{Si}-(OR^{II})_{3-n} \quad (2)$$

dans laquelle:

$X_1$ et $X_2$ peuvent être identiques ou différents et sont choisi parmi tous les radicaux qui ont été définis ci-dessus pour X, et dans laquelle Z, $R^I$ et $R^{II}$ sont tels que définis ci-dessus;

B) le trioxane $(CH_2O)_3$, ou un paraformaldéhyde de formule générale:

$$H-(OCH_2)_m-OH \quad (3)$$

dans laquelle m vaut de 6 à 100;

C) un acide organique monocarboxylique, et, éventuellement,

D) un acide minéral choisi parmi l'acide phosphorique, l'acide borique, et l'acide silicique,

ledit procédé étant caractérisé en ce que la composition est préparée de la façon suivante: on fait réagir le composant (A) avec le composant (B) en un rapport molaire, exprimé en terme de (B)/N, c'est-à-dire comme le rapport du composant (B) aux atomes d'azote des fonctions amines, situé dans l'intervalle allant de 0,15 à 1,2, à une température comprise entre 5°C et 70°C, dans une atmosphère inerte et exempte d'humidité, on arrête brutalement la réaction de telle sorte que la viscosité dynamique du milieu réactionnel ne s'élève pas au-dessus de 30 mPa.s, mais s'élève à une valeur supérieure à 5 mPa.s, lorsqu'on la mesure à 27°C, on dilue finalement le produit de la réaction de (A) avec (B) dans un bain de dilution constitué d'un solvant aqueux ou d'un mélange aqueux de solvant, contenant un acide organique monocarboxylique (C) et éventuellement un acide minéral (D) dissous dedans, le composant (D) étant présent en une quantité telle que le rapport molaire, exprimé en terme de (D)/N, c'est-à-dire le rapport de (D) aux atomes d'azote des fonctions amines, se situe dans l'intervalle allant de 0 à 0,39, le rapport des équivalents acide carboxylique aux atomes d'azote des fonctions amines, en terme de (—COOH/N), variant à l'intérieur de l'intervalle allant de 0,75 à 2,5, de telle sorte que le pH de la composition finale se situe à l'intérieur de l'intervalle allant de 3 à 6.

2. Procédé conforme à la revendication 1, caractérisé en ce que dans le composant (A), X représente $(CH_2)_m$, m étant compris entre 1 et 10, $R^I$ est un radical alkyle ou aryle, $R^{II}$ est choisi parmi les radicaux alkyle, alcényle, cycloalkyle et aryle, et n vaut zéro ou 1.

3. Procédé conforme à la revendication 1, caractérisé en ce que dans le composant (A), $R^I$ est choisi parmi un atome d'hydrogène, les radicaux alkyle comportant 1 à 8 atomes de carbone, et les radicaux aryle, en particulier phényle, et $R^{II}$ est un radical alkyle comportant de 1 à 8 atomes de carbone.

4. Procédé conforme à la revendication 1, caractérisé en ce que le composant (A) est choisi parmi le 3-aminopropyl-triéthoxysilane, l'aminométhyl-triéthoxysilane, le 2-aminométhyl-aminopropyl-triméthoxysilane, et le 2-aminoéthyl-aminopropyl-méthyldiméthoxysilane.

5. Procédé conforme à la revendication 1, caractérisé en ce que le composant (C) est choisi parmi les hydroxyacides, aldéhyde-acides et céto-acides comportant de 1 à 4 atomes de carbone, éventuellement substitués par des atomes d'halogène.

6. Procédé conforme à la revendication 5, caractérisé en ce que le composant (C) est choisi parmi les acides formique, acétique, chloroacétique, dichloroacétique, trichloroacétique, fluoroacétique, difluoroacétique, trifluoroacétique, glyoxylique, et glycolique.

7. Procédé conforme à la revendication 1, caractérisé en ce que le rapport molaire (B)/N est compris entre 0,45 et 0,99.

8. Procédé conforme à la revendication 1, caractérisé en ce que la réaction entre le composant (A) et le composant (B) a lieu en solution dans un solvant choisi parmi les éthers, les hydrocarbures aliphatiques et

cycloaliphatiques, les alcools aliphatiques, les hydrocarbures chlorés et fluorés, les esters, les amides, les alkyl-alcoxysilanes de formule générale:

$$R^{I}_{n}\text{—}Si(OR^{II})_{4-n}$$

dans laquelle $R^{I}$ et $R^{II}$ ont les mêmes significations que celles définies dans la revendication 1 pour le composant (A), et les alkyl-acylsilanes.

9. Procédé conforme à la revendication 1, caractérisé en ce que la réaction entre le composant (A) et le composant (B) a lieu à une température située dans l'intervalle allant de 12°C à 50°C.

10. Procédé conforme à la revendication 1, caractérisé en ce que la réaction entre le composant (A) et le composant (B) se déroule pendant une durée de 30 minutes à 5 heures.

11. Procédé conforme à la revendication 1, caractérisé en ce que le solvant organique contenant le composant (C) et éventuellement le composant (D) est choisi parmi les éthers, les alcools, les hydrocarbures aliphatiques et cycloaliphatiques, les hydrocarbures fluorés, les silanes, les alcoxysilanes et les mélanges de ces composés.

12. Procédé conforme à la revendication 11, caractérisé en ce que le solvant organique est choisi parmi les alcools aliphatiques comportant de 1 à 5 atomes de carbone, en particulier le méthanol, l'éthanol, l'isopropanol, le n-butanol, et leurs mélanges.

13. Procédé conforme à la revendication 1, caractérisé en ce que le rapport des équivalents acide carboxylique aux atomes d'azote des fonctions amines, c-est-à-dire (—COOH/N), varie entre 1, 2 et 2.

Fig.1

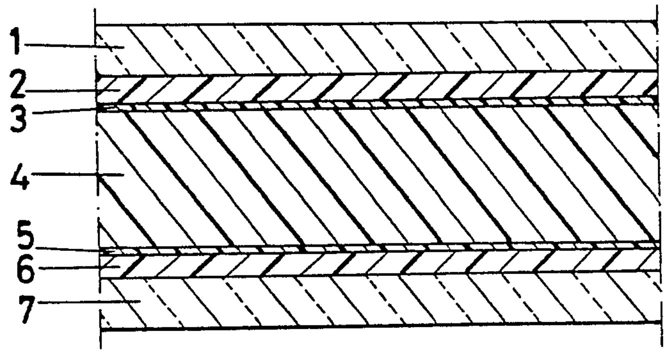


Fig.2